# EUROPEAN PATENT SPECIFICATION

(11) **EP 1 734 708 B1**
(45) Date of publication and mention of the grant of the patent: **22.09.2010**
(21) Application number: 05103095.5
(22) Date of filing: 18.04.2005
(51) Int. Cl.: H04L 12/58, G06Q 10/00

(54) **Method, transmitter, receiver, computer readable medium, communications network and application development environment for providing various levels of reliable messaging between a client and a server**
Verfahren, Sender, Empfänger, Computer lesbares Medium, Kommunikationsnetzwerk und Anwendungsentwicklungsumgebung zur Bereitstellung verschiedener Zuverlässigkeitsebenen für einen Nachrichtenaustausch zwischen Kunden und Server
Méthode, transmetteur, récepteur, support lisible par ordinateur, réseau de communication et environnement de développement d'applications pour fournir plusieurs niveaux de messagerie fiable entre un client et un serveur

(43) Date of publication of application: 20.12.2006
(73) Proprietor: RESEARCH IN MOTION LIMITED, Waterloo, Ontario N2L 3W8 (CA)
(72) Inventor: Karmakar, Srimantee, L5M 5W1, Mississauga, (CA); Goring, Bryan R., L9T 5V4, Milton, (CA); Bibr, Viera, L0P 1G0, Kilbride, (CA); Matovsky, Michael, M2R 2E2, Toronto (CA); Shenfield, Michael, L4C 3S9, Richmond Hill, (CA); Fritsch, Brindusa, M9C 2J9, Toronto, (CA); Vitanov, Kamen B., L5M 6E8, Mississauga, (CA)
(74) Representative: Patel, Binesh

(56) References cited:
- WO-A-01/69432
- GB-A- 2 401 011
- US-A- 6 115 365
- US-A- 2002 004 812
- US-A1- 2004 243 800

## Description

The present invention relates generally to reliable message transfer between a client and a server, and specifically to a system and method for providing various levels of reliability for transferring the messages.

Reliable messaging is an integral part of any client-server system that supports guaranteed and ordered processing of end-user requests as well as reliable system level communication between the client and the server.

Basically, reliable messaging refers to the ability of a sender to send a message once and only once to its intended receiver. In order to facilitate reliable messaging, the client-server system should be able to support reliably transmitting messages in support of processes whose lifetimes commonly exceed the lifetimes of the components on which these processes are realized. Further, the client-server system should be able to support quality-of-service assertions for ensuring that messages are received in the same order in which they were sent and that failure to deliver a message is made known to both the sender and receiver.

However, reliable messaging requires more system resources and slows performance when compared to best-effort messaging. This becomes especially important when the client has limited resources and processing power, such as for wireless devices. For best-effort messaging, messages are discarded when a messaging engine stops or fails. Messages may also be discarded if a connection used to send them becomes unavailable as a result of constrained system resources. Therefore it can be seen that best effort messaging does not provide the transmission assurance provided by reliable messaging.

US6115365 discloses a system employing a message transmission queue including a high priority queue (HPQ) having a high priority entry point; a medium priority queue (MPQ) having a medium priority entry point; and a low priority queue (LPQ) having a low priority entry point. Messages in the MPQ are queued after all messages in the HPQ. Messages in the LPQ are queued after all messages in the MPQ. A sequencer reinserts messages into the queue based on the message repeat count and the message's previous queue position.

US2004/0243800 discloses a system employing reliable end-to-end messaging in which tracking and acknowledgement information are contained in an electronic message that is visible to layers above the transport layer, thereby being independent of what transport protocols, and whether different transport protocols, are used to communicate between the two end points. Furthermore, acknowledgment messages may identify multiple ranges of sequence numbers corresponding to received electronic messages, thereby permitting further flexibility and completeness in acknowledging received messages.

US2002/0004812 relates to the remote monitoring, diagnosis and control of machines using connection and connectionless modes of communication for transmitting messages. Transmitting a message, such as an e-mail message, over a connectionless mode of communication may be unreliable. A direct connection may be used to improve reliability. A device initially transmits a connectionless-mode message. If the connectionless-mode message does not provide the required response, a connection-mode message is transmitted. Transmitting a message using either the connectionless-mode or the connection-mode communication may be dependent on an "event". Therefore, an urgent event would use the connection-mode communication while a less urgent event would use the connectionless-mode communication.

GB2410011 discloses a session independent platform for data transfer which enables delivery of messages over a network to be reliable, even if an unreliable protocol such as UDP/IP or ATM is used. In this asynchronous communication method each message is preferably individually acknowledged, authenticated and encrypted. The client terminal is preferably a wireless mobile terminal such as a smart phone and may be used for e-mail. Rather than sending a complete data set between the terminal and the server, it is only necessary to send an "event" listing the changes to the data stored at terminal or server. The arrangement may enable messages containing an ID of the mobile terminal to be mapped to the dynamically allocated IP address of the terminal. The server and terminal may together act as a client to a second server.

Accordingly, there is a need for a client-server messaging system that facilitates improved performance while also providing reliability.

In accordance with an aspect of the present invention there is provided a method for transmitting application messages from a sender to a receiver via a communication network, the method being characterized by the steps of: receiving application messages at the sender to transmit to the receiver, each of the messages including a reliability mode reference indicating a message reliability level for the message, the message reliability level for each of the messages being assigned out of a plurality of predefined message reliability levels, each of the messages having a predefined reliability mode; for each of the messages: identifying the predefined reliability mode by checking the reliability mode reference of the message; selecting messaging operations from a plurality of messaging operations depending on the identified predefined reliability mode, the messaging operations providing a different level of reliability for each pre-defined reliability mode; processing the message at the sender using the selected messaging operations; and using a predefined transport protocol for transmitting the message to the receiver for processing using messaging operations associated with the reliability mode reference to process the message.

In accordance with a further aspect of the present invention there is provided a method for receiving messages from a sender at a receiver via a communication network, the method characterized by the steps of: receiving application messages at the receiver, each of the messages including a reliability mode reference indicating a message reliability level for the message, the message reliability level of each of the messages being assigned out of a plurality of predefined message reliability levels, each of the messages having a predefined reliability mode; for each of the messages: identifying the predefined reliability mode by checking the reliability mode reference of the message; selecting messaging operations from a plurality of messaging operations depending on the identified predefined reliability mode, the messaging operations providing a different level of reliability for each pre-defined reliability mode and defining how the messages are to be processed at the sender and the receiver; and processing each of the messages at the receiver using the selected messaging operations associated with the reliability mode reference included in the message.

In accordance with yet a further aspect of the present invention there is provided a transmitter for transmitting messages to a receiver via a communication network, the transmitter characterized by: memory for queuing messages received from an application, each of the messages including a reliability mode reference indicating a message reliability level, the message reliability level for each of the messages being assigned out of a plurality of predefined message reliability levels, each of the messages having a predefined reliability mode; a processor configured to identify the predefined reliability mode for each of the messages and select messaging operations from a plurality of messaging operations depending on the identified predefined reliability mode, and process the message using the selected messaging operations; a protocol layer for transmitting each of the messages to the receiver using a selected transport protocol.

In accordance with yet a further aspect of the present invention there is provided a receiver for receiving application messages from a sender via a communication network, the receiver characterized by: means for receiving application messages at the receiver, each of the messages including a reliability mode reference indicating a message reliability level for the message, the message reliability level of each of the messages being assigned out of a plurality of predefined message reliability levels, each of the messages having a predefined reliability mode; means for identifying for each of the messages the predefined reliability mode out by checking the reliability mode reference of the message; means for selecting messaging operations from a plurality of messaging operations depending on the identified predefined reliability mode, the messaging operations providing a different level of reliability for each pre-defined reliability mode and defining how the messages are to be processed at both the sender and the receiver; and means for processing each of the messages at the receiver using the selected messaging operations.

In accordance with yet a further aspect of the present invention there is provided an application development environment for facilitating the development of an application for execution on a computing device, the application development tool configured to provide a developer with an option to assign a predefined reliability mode for each message in the application, the predefined reliability mode for determining which of a plurality of messaging operations to use for communicating the message during execution of the application, the messaging operations defining how the messages are to be processed at both the sender and the receiver.

In accordance with yet a further aspect of the present invention there is provided computer readable med as defined in claims 7 and 14 and communications network as defined in claim.

### BRIEF DESCRIPTION OF THE DRAWINGS

An embodiment of the invention will now be described by way of example only with reference to the following drawings in which:
Figure 1 is a block diagram of a communication network infrastructure;
Figure 2 is a block diagram illustrating transmission of a message from a sender to a receiver;
Figure 3 is a block diagram illustrating a sequence of events for removing messages from a sender's message queue;
Figure 4 is a block diagram illustrating an alternate embodiment for transmission of a message from a sender to a receiver to that shown in Figure 2;
Figure 5 is a block diagram illustrating a designer tool environment; and
Figure 6 is a diagram illustrating the distribution of user modules as plug-ins.

### DETAILS

For convenience, like numerals in the description refer to like structures in the drawings. In the description, the following definitions apply.

"Message ordering" is typically achieved in a First-In-First-Out (FIFO) order. The messages are ordered based on an order property with respect to other messages containing the same order property.

"Transmission success" is defined as the receipt of positive acknowledgement for a transmitted message.

"Transmission failure" is defined as the receipt of negative acknowledgement for a transmitted message. A negative acknowledgement can be generated for several reasons. For a message being transferred from the server to the client, transmission failure can occur if device has no radio coverage. For a message being transferred from the client to the server, transmission failure can occur because the server is experiencing technical difficulties.

Further a mechanism may be included for controlling the flow of messages, typically to the device. This mechanism may be implemented at one or both of the client and the server. Accordingly, transmission failure can also occur if message transmission has been suspended as part of the client device's flow control mechanism. As will be appreciated by a person of ordinary skill in the art, a transmission failure can occur due to a number of other network or internal system problems.

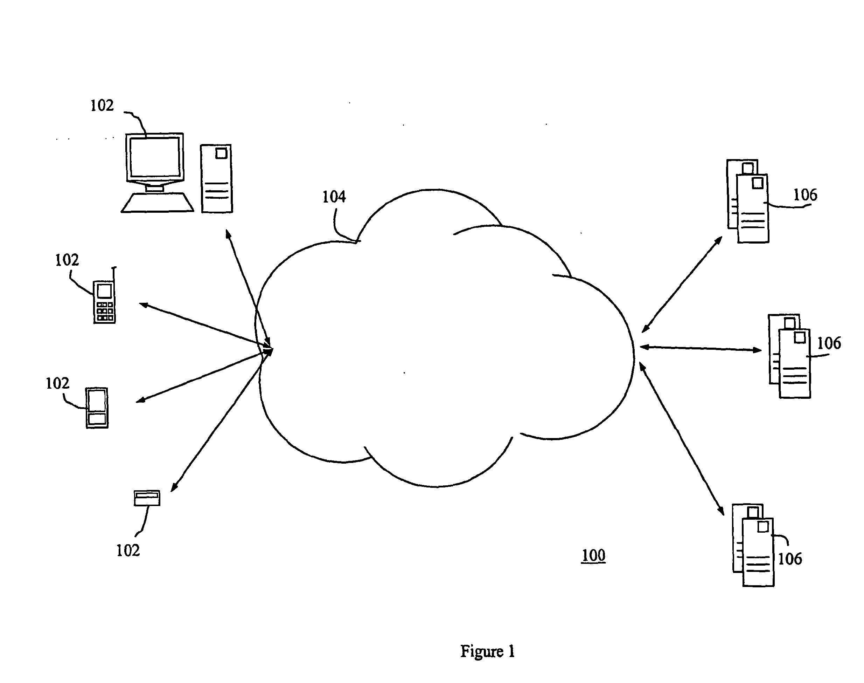

Referring to Figure 1, a communication network infrastructure is illustrated generally by numeral 100. The communication network infrastructure 100 comprises a plurality of communication devices 102, a communication network 104, and a plurality of servers 106.

The communication devices 102, also referred to simply as devices 102, may include any wired or wireless device such as a desktop computer, a laptop or mobile computer, a smart phone, a personal digital assistant, such as a Blackberry™ by Research in Motion for example, and the like. The communication devices 102 are in communication with at least one of the servers 106 via the communication network 104. Accordingly, the communication network 104 may include one or more of components including a wireless network, a relay, a corporate server, a mobile data server (MDS) and an application gateway for relaying messages between the devices 102 and the servers 106. The types of backend servers 106 and their corresponding links will be apparent to a person of ordinary skill in the art.

Applications on the devices 102 communicate and exchange data with each other and the servers 106 via messaging. A sender, either the device 102 or the server 106, transmits the message to a receiver, either the server 106 or the device 102, respectively. Although reliable messaging protocols exist to support services such as the Short Message Service (SMS), the present embodiment supports different delivery modes per message per application. Further, to facilitate the limitations of wireless devices and other devices that may have similar constraints, the dependability of reliable messaging and the performance enhancement of best-effort messaging are combined and used per message as required.

In the present embodiment, three levels of reliability are established. The number of levels has been selected as three as it is sufficient for the present implementation. A person of ordinary skill in the art will appreciate that generally two or more levels of reliability utilized in accordance with the present invention will be able to enhance messaging performance. The three levels of the present embodiment include best-effort, standard, and reliable messaging.

For best effort messaging, both message delivery and the delivery order from the sender, as well as message processing and processing order at receiver, are not guaranteed. Further, best-effort messages are not lost on a transmission failure. Rather, they are queued at the sender's system until the transmission succeeds or the maximum number of retries for a message has been surpassed. However, since best-effort messages are only kept in memory and not placed in persistent storage by the sender, a sudden crash of the sender's system will cause these messages to be lost.

Similarly, once a message is received it is queued, but not placed in persistent storage. Accordingly, a sudden crash of the receiver's system may cause these received messages to be lost if they have not yet been processed.

However, if either system is gracefully shutdown, that is if either system is turned off by its user as opposed to crashing, the messages are placed in persistent storage before shutting down. Once the corresponding system is restarted, the messages are loaded into the memory queue and removed from persistent storage.

For standard messaging, the message delivery order is guaranteed by the sender and the message processing order is guaranteed by the receiver. However, delivery and processing are not guaranteed. Therefore, although delivery and processing are not guaranteed, if they occur the correct order for each is guaranteed.

The message delivery order is guaranteed by a protocol of an underlying network layer. This can be achieved, for example, by the Transmission Control Protocol (TCP) or other proprietary transport protocol. Further, message delivery order can be guaranteed by the application layer. Accordingly, such an application can be used in addition to the TCP. Alternately, if the application layer guarantees message delivery order, other protocols, such as User Datagram Protocol (UDP), that do not necessarily guarantee message delivery order can be used.

In the present embodiment, transport layer libraries handle message ordering. Further, the application layer guarantees message ordering by queuing messages in the order they are received by the messaging layer and not transmitting a message until the one preceding it has been transmitted successfully or expired.

The message processing order is guaranteed through a use of sequence numbers as part of the message header. A sequence number check on the message also ensures that the message is processed exactly once. Standard messages have the same transmission and persistence characteristics as described with reference to best-effort messaging.

Further, similar to best-effort messaging a sudden crash of either the sender's or receiver's system may cause these messages to be lost if they have not yet been processed.

For reliable messaging, message delivery and the message delivery order are guaranteed by the sender. Message processing and the message processing order are guaranteed by the receiver. As previously described, the message delivery order is guaranteed by the underlying network layer, while the message processing order is guaranteed through the use of sequence numbers as part of the message header. The sequence number check on the message also ensures that the message is processed exactly once.

Further, reliable messages are placed in persistent storage by the sender when they are generated, and are not removed from persistence storage until the transmission succeeds or a maximum number of retries for a message has been surpassed. Reliable messages are also placed in persistent storage by the receiver as soon as they are received and before they are acknowledged. The receiver removes a reliable message from persistent storage only after it has been processed. Thus, these messages are protected against sudden system crashes at both the sender and receiver.

Accordingly, it can be seen that unlike best-effort and standard reliability, a sudden crash of either the sender's or receiver's system will not cause reliable messages to be lost, even if they have not yet been processed.

In accordance with the present embodiment a messaging system is provided that supports the creation and dynamic processing of messages with different reliability modes transmitted through the same transport protocol.

In order to facilitate processing messages with different reliability modes, an application developer is provided with the ability to select a desired reliability mode when designing an application. An application development environment for developing the application allows the user to select a reliability mode property for any message component defined for the application. This property is typically stored as part of the message definition. Thus, the developer will be able to specify message reliability modes on a per message basis for any application. The following describes the details of a sample designer tool architecture with which a developer can define an application including variable message reliability.

### Designer Tool Architecture

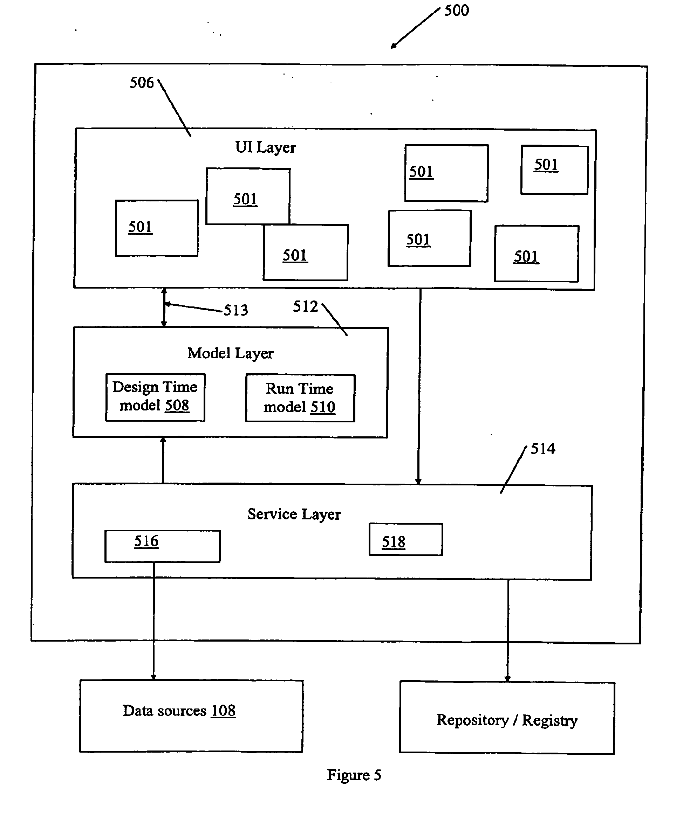

Figure 5 illustrates an overall designer tool structure for designing component applications, illustrated generally by numeral 500. In the present embodiment, the designer tool is implemented using the Eclipse Platform, or Eclipse. Eclipse is designed to support the construction of a variety of tools for application development. Further, Eclipse supports an unrestricted set of tool providers, including independent software vendors (ISVs) as well as tools for manipulating arbitrary content types (for example HTML, Java, C, JSP, EJB, XML, and GIF). Eclipse supports both GUI and non-GUI-based application development environments.

Eclipse's principal role is to provide tool providers with mechanisms to use, and rules to follow, that lead to seamlessly-integrated tools. These mechanisms are exposed via well-defined API interfaces, classes, and methods. Eclipse also provides useful building blocks and frameworks that facilitate developing new tools.

Eclipse comprises a plug-in architecture, wherein a plug-in is the smallest unit that can be developed and delivered separately. Usually a small tool is written as a single plug-in, whereas a complex tool has its functionality split across several plug-ins. Plug-ins are coded in Java and a typical plug-in consists of Java code in a JAR library, some read-only files, and other resources such as images, web templates, message catalogs, native code libraries, and the like.

Each plug-in has a manifest file declaring its interconnections to other plug-ins. In order to define interconnections a plug-in declares any number of named extension points, and any number of extensions to one or more extension points in other plug-ins. Eclipse is a well-known environment, and these and other features are thoroughly described at www.eclipse.org.

In the present embodiment, Eclipse is used to enable a developer to design a component application. A component application is an application defined generally by a structured set of components, including data components, message components, presentation components and workflow components. The components are defined using a structured language and executed on a client device by an intelligent runtime container.

The data components define data entities that are used by the component application program. Examples of data entities include orders, users, and financial transactions. Data components define what information is required to describe the data entities, and in what format the information is expressed. For example, the data component may define an order comprising a unique identifier for the order which is formatted as a number, a list of items which are formatted as strings, the time the order was created which has a date-time format, the status of the order which is formatted as a string, and a user who placed the order which is formatted according to the definition of another one of the data components. Since data elements are usually transferred by message, there is often persistence of data components in a database. Data components may be dynamically generated or defined by the application designer.

The message components define the format of messages used by the component application program to communicate with external systems such as the web service. For example, one of the message components may describe a message for placing an order, which includes a unique identifier for the order, a status of the order, and notes associated with the order.

The presentation components define the appearance and behaviour of the component application program as it displayed to a user via a user interface. The presentation components can specify graphical user interface (GUI) screens and controls, and actions to be executed when the user interacts with the component application. For example, the presentation components may define screens, labels, edit boxes, buttons and menus, and actions to be taken when the user types in an edit box or pushes a button.

The workflow components of the component application program define processing that occurs when an action is to be performed, such as an action specified by a presentation component as described above, or an action to be performed when messages arrive. Presentation workflow and message processing are defined by the workflow components. The workflow components are written as a series of instructions in either metadata or a programming language or a scripting language. The workflow component supports a correlation between message components and defines application flow as a set of rules for operations on other components.

More details regarding component application can be found in Patent Cooperation Treaty Application Numbers PCT/CA2003/001976, PCT/CA2003/001980 and PCT/CA2003/001981, titled "System and Method for Building and Execution of Platform-Neutral Generic Services Client Applications", "System and Method of Building Wireless Component Applications" and "System and Method of Creating and Communicating with Component Based Wireless Applications", respectively.

The designer tool 500 comprises a user interface (UI) layer 506, a model layer 512 and a service layer 514. The UI layer 506 primarily comprises a collection of user modules 501, including graphical and text editors, viewers and wizards. A large majority of external interactions are accomplished through one or more of these modules, with the developer using a system of drag and drop editing and wizard driven interaction. A secondary, non-user facing system interface is that of backend connector, whereby the designer tool 500 can with various backend servers 106 such as Web Services providers and relational databases for example. As described above, designer the tool 500 can be built on the Eclipse platform. Accordingly, the user modules 501 are plug-in modules 501 that extend Eclipse classes and utilize the Eclipse framework.

The UI layer 506 has access to an extensive widget set and graphics library known as the Standard Widget Toolkit (SWT), for Eclipse. Further, the user modules 501 can utilize a higher-level toolkit called JFace that contains standard viewer classes such as lists, trees and tables and an action framework used to add commands to menus and toolbars. The designer tool 500 can also use a Graphical Editing Framework (GEF) to implement diagramming editors. The user modules 501 typically follow the Model-View-Controller design pattern where each user module 501 is both a view and a controller.

The data layer 512 includes a design time model 508 and a runtime model 510 represent the persistent state of the application. The separation of the layers UI layer 506 and the data layer 512 keeps presentation specific information in various views and allows multiple user modules 501 to respond to data model 508,510 changes.

In the present embodiment, the data models 508,510 are based on the Eclipse Modeling Framework (EMF). EMF is a framework and code generation facility. The framework provides model change notification, persistence support and an efficient API for manipulating EMF objects generically. A code generation facility is used to generate the model implementation and create adapters to connect the model layer 512 with the UI layer 506.

The service layer 514 provides services for the UI layer 506 such as validation, localization, generation, build and deployment. The designer tool 500 uses Eclipse extension points to load additional plug-ins for two types of services: backend connectors 516 and device skins 518. The backend connectors 516 define extension points for facilitating communication with different backend server 106. The device skin 518 defines an extension point for allowing the designer tool 500 to emulate different devices 102.

The UI Layer 506 uses a Model-View-Controller (MVC) pattern where each user module 501 can be both a viewer and a controller. As controllers, user modules 501 interact with the model layer 512 models with some related control logic as defined by the MVC pattern. In the present embodiment, both editors and viewers are examples of user modules 501 that commit changes to the models immediately upon implementation. Wizards are user modules 501 that are step-driven by a series of one or more dialog interfaces, wherein each dialog interface gathers specific information from a user of the design tool 500. The wizards 504 apply no changes to the models until confirmation is received, such as selecting a finish button.

As viewers, the user modules 501 are observers of the models and are used to interact or otherwise test and modify the models of the application. When the model data changes, the models are notified and respond by updating the presentation of the application. The design time model 508 is the current version of the application in development and is accessed by users employing the user modules 501 to interact with the associated data of the design time model 508. Modules 501 can also trigger validation actions on the design time model 508. User modules 501 can also cause some or all of the application to be generated from the design time model 508. In general, the design time model 508 accepts a set of commands that affects the state of the model 508, and in response may generate a set of events. Each user module 501 includes the set of commands and the events that affect the module 501 and data model 508 pairing.

The design time model 508 represents the state of an application development project and interacts with the user modules 501 by notifying user modules 501 when the state of the design time model 508 has changed. The design time model's 508 primary responsibility is to define an applications, and, accordingly, may include: data component definitions; global variable definitions; message component definitions; resource definitions; screen component definitions; scripts; style definitions. The design time model 508 responds to commands of each editor and/or viewer. The design time model 508 also sends events to user modules 501 in response to changes in the design time model 508, as well as communicating with the other modules 501 when the design time model 508 has changed.

The following describes the mechanism used by the user modules 501 to interact with the design time model 508. The design tool 500 uses the EMF.Edit framework provided by Eclipse and generated code as a bridge 513 between the UI layer 506 and the model layer 512. Following the Model-View-Controller pattern, the user modules 501 do not know about the design time model 508 directly but rely on interfaces to provide the information needed to display and edit the data in the design time model 508.

For example, a tree viewer uses a TreeContentProvider and LabelProvider interface to query the structure of the tree and get text and icons for each node in the tree respectively. Table viewers and list viewers work in a similar way but use the structured ContentProvider and LabelProvider interfaces.

Each class in the design time model 508 is a change notifier. That is, anytime an attribute or reference is changed an event is triggered. In EMF a notification observer is called an adapter because not only does it observe state changes, but it can also extend the behaviour of the class to which it is attached by supporting additional interfaces. An adapter is attached to a model object by an adapter factory. An adapter factory is asked to adapt an object with an extension of a particular type. The adapter factory is responsible for creating the adapter or returning an existing one, the model object does not know about adapting itself.

The design tool 500 uses EMF to generate a set of adapters for the data model 508 called item providers. Each item provider is an adapter that implements provider interfaces to extend the behaviour of the model object so it can be viewed and edited and at the same time is a notification observer that can pass on state changes to listening views. The design tool 500 connects the user modules 501 to the design time model 508 by configuring them with one or more EMF.Edit classes. Each EMF.Edit class supports an Eclipse UI provider interface. The EMF.Edit class implements an interface call by delegating to an adapter factory. The adapter factory then returns a generated adapter that knows how to access the design time model 508. When the state of the design time model 508 changes, the same adapters are used to update the user modules.

The following commands are example commands that can affect related modules 501 of the UI layer 506: ComponentAdded - a component has been added to the application; ComponentRemoved - a component has been removed from the application; ComponentRenamed - a component has been renamed; NavigationControlChanged - a button or menu item has been added, removed or had its properties changed on a screen of the application; DataBindingChanged - a data-bound control has been added, removed or had its properties changed on a screen; ScreenParameterListChanged - a parameter has been added or removed from one of the screen components; FieldMappingChanged - a message level, field level or prototype mapping has changed; MessageContainmentChanged - a containment relationship has changed; MessageFieldChanged - a message field has been added, removed or had its properties changed for a message and/or a screen component; DataFieldChanged - a data field has been added, removed or had its properties changed from a message, data and/or screen component; NavigationChanged - a script that may contain navigation code has changed of a workflow component; LocalizedStringChanged - a literal string has been added, removed or changed and ExitCodeChanged - Exit code has been added or removed from a script of the workflow component.

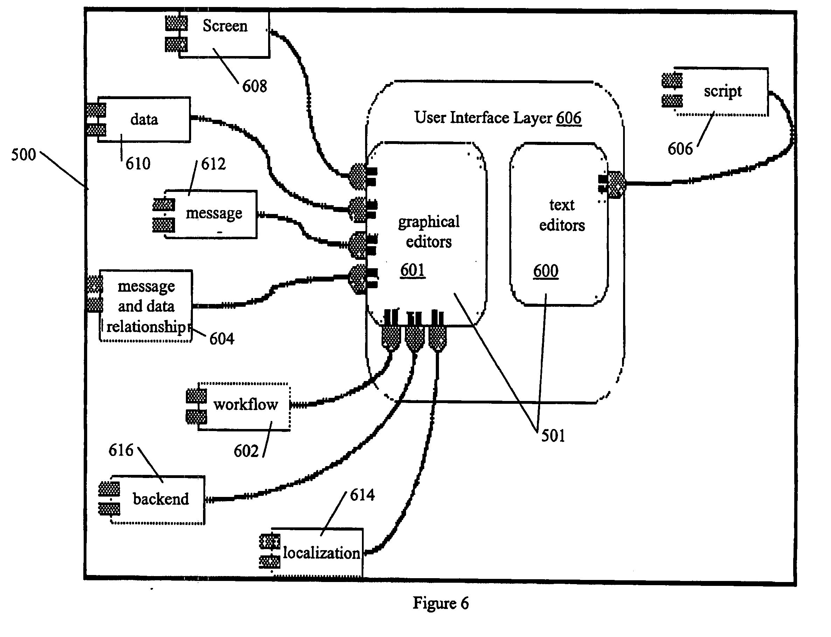

Referring to Figure 6, the distribution of user modules 501 as Eclipse plug-ins is shown. User modules 501 fall broadly into two categories: Text Editors 600, which implement standard line based editing functionality; and Graphical Editing Framework (GEF) Editors 601 that provide an edit space in which to draw objects. A GEF Editor 601 in the context of the design tool 500 can contain a palette and a canvas, as is known in the art. The user can drop nodes (entities) from the palette onto the canvas and add connections to define relationships there between, so as to define the content and interrelationships of the components of the application. It will be recognised that the user modules 501 are used to create and modify definitions contained in the components as well as to create and modify the interdependencies there between. Further, it will be recognised that the user modules 501 can be a combination of text based and/or graphical based modules 501, as desired.

### User Modules

As previously described, the user modules 501 are not directly aware of the design time model 508. Generally, the user module 501 creates a command to change the design time model 508 so that the change can be undone through an undo API (not shown). The user module 501 can be configured with an EMF core object called an editing domain that maintains a command stack. The editing domain uses the adapter factory to find an adapter that can create the command. The generated adapter class (ItemProvider) creates the command. The user module 501 executes the command by using the command stack. Further, because the ItemProvider is a notification observer it is notified when the design time model 508 changes. The ItemProvider in turn notifies a corresponding provider. The provider instructs the user module 501 to refresh after a change notification.

### Script Editor

The script editor is a constrained text editor for providing relationships between application components. Typically, this information is provided as part of the workflow component. Some commands, such as creating functions, can be restricted such that it is not user-definable in the component application. Accordingly, when a function is created, the events generated by the script editor are fixed. Other commands, such as SaveScript for example, may be edited by the script editor 606. SaveScript is used when the user saves a script of the application. In the present embodiment, SaveScript triggers the design time model 508 events NavigationChanged, LocalizedStringChanged and ExitCodeChanged, if successful.

Further, the script editor can react to events. For example, ComponentRemoved indicates whether a removed component affects input parameters to the script or globals used by the script. If the removed component affects the script, the script editor prompts the user of the design tool 500 that the script is invalid.

A sample interface of the script editor extends the org.eclipse.ui.editors extension point of the Eclipse framework by implementing a subclass of the org.eclipse.ui.editors.texteditors hierarchy. The design tool 500 coordinated the creation and/or modification of scripts in the components as well as the inter-relation of the script affecting other associated components of the application.

### Screen Editor

The screen editor 608 facilitates creation and modification of the structured definition language code in the screen components associated with display of data on the device 102. UI controls for inclusion in the screen components can be dropped onto a form canvas in the editor. Control properties, including event handlers, can be edited by the screen editor 608.

Sample commands that can be edited by the screen editor 608 include the following commands. ButtonChange is sent to the design time model 508 when the developer changes a button control. This command triggers NavigationControlChanged of the design time model 508 if successful. MenuItemChange is sent when the developer changes a menu item. This command triggers NavigationControlChanged of the design time model 508 if successful. ChangeScript is sent when the developer changes a script. This command triggers NavigationControlChanged of the design time model 508 if successful. QueryMessages is sent when the developer needs a list of available messages that screen of the application may send or refresh, and returns a list of available messages. QueryData is sent when the developer needs a list of available data objects to bind controls to, and returns a list of available data. NonNavigationControlChange is sent when a control that does not affect navigation has been modified. DataBindingChange is sent when a data binding has changed. This command triggers DataBindingChanged and ScreenParameterListChanged of the data model 508 if successful.

Sample input events to the screen editor 608 include the following. An event ComponentRemoved informs the screen editor that a component to which a screen component reference has been removed. An event ComponentRenamed is similar to ComponentRemoved. An event ScreenParameterListChanged modifies the screen component if a parameter used has been modified. The screen component either adjusts that parameter or warns the developer that those dependencies are no longer valid and must be changed. An event MessageFieldChanged checks to see if a field in question is used by the screen component. An event DataFieldChanged checks to see if any controls bound to the field(s) have changed and warns the developer accordingly.

A sample interface of the screen editor 608 extends org.eclipse.ui.editors of the Eclipse framework using the GEF GraphicalEditor and/or a VE editor. The design tool 500 coordinates the creation and/or modification of screen definitions in the screen components as well as the inter-relation of the screen definitions affecting other associated components of the application.

### Data Editor

The data editor 610 facilitates creation and modification of the structured definition language code in the data components of the application by providing the developer the ability to edit data component fields and properties. New data objects can be created from scratch, by prototyping existing Data objects or based on data definition mappings to message objects in message components.

Sample commands editable by the data editor 610 include the following. AddRemoveFields is sent when the developer adds or removes a field from a Data object definition. This command triggers DataFieldChanged of the data model 508 if successful. LinkToExternalData is sent when the developer links a data object definition to an external data object, such as a Calendar or Contacts data object for example. This command triggers DataFieldChanged of the data model 508 if successful.

Sample input events to the data editor 610 include the following. An event ComponentRemoved checks to see if a removed object was related to a message through prototyping or containment. The developer can then adjust the fields contained in the Data object affected. An event ComponentRenamed is similar to ComponentRemoved.

A sample interface of the screen editor 608 extends org.eclipse.ui.editors using the GEF GraphicalEditor. The design tool 500 coordinates the creation and/or modification of data definitions in the data components as well as the inter-relation of the data definitions and associated screen/message definitions affecting other associated components of the application.

### Message Editor

The message editor 612 facilitates creation and modification the structured definition language code in the message components of the application. The message designer allows a developer to create and edit messages components for sending messages to and receiving messages from backend servers 108. These messages can include both request/response pairs as well as subscribe/notify/unsubscribe notification messages. Message definitions can be created by prototyping existing messages or by templates based on backend services of the backend servers 108. Further, the message editor provides the ability to select a reliability level for the message. As previously described, the reliability level defines how the message is to be handled at the device 102 and the application gateway 106, including delivery, acknowledgement and persistence. The message reliability can be set by an appropriate UI input mechanism such as a drop down menu or radio button selection. The message reliability can be set on a per message or per application level.

Sample commands that can be edited by the message editor 612 include AddRemoveFields, which is sent when a field is added to or remove from a message in a message component. Sample input events to the message editor 612 include the following. An event ComponentRemoved checks to see if a component that referenced the message definition has been removed. An event ComponentRenamed is similar to ComponentRemoved. An event FieldMappingChanged checks to see if a field mapping effects the message definitions being edited.

A sample interface of the screen editor 608 extends org.eclipse.ui.editors using the GEF GraphicalEditor. The tool design 500 coordinates the creation and/or modification of message definitions in the message components as well as the inter-relation of the created/modified message affecting other associated components of the application.

### Workflow Editor

The workflow editor 602 facilitates creating and modifying the command code in the workflow components of the application. The workflow editor 602 defines the screen-to-screen transitions that form the core of the visual part of the component application. Screens and transitions between screens due to user/script events are rendered visually.

Sample commands that can be edited by the workflow editor 602 include the following. QueryScreens is sent when the developer wants a list of screens to select from, such as when adding a new screen to the workflow. QueryScripts is sent when the developer wants a list of scripts to call on a screen navigation event. QueryArrivingMessages is sent when the developer wants a list of response messages (including notifications) on which to key screen transitions. AddComponent is sent when the developer wants to add a new screen, message or script to the workflow that doesn't already exist in the workflow. This command triggers ComponentAdded of the data model 508 if successful. ChangeNavigation is sent when the developer adds a new navigation to the workflow. This command triggers NavigationChanged of the design time model 508 if successful.

Sample input events to the workflow editor 602 include the following. An event ComponentRemoved checks to see if a removed component is a workflow object. The Workflow updates itself by deleting all relationships with this object definition. An event ComponentRenamed checks to see if a renamed component is a workflow object. The workflow updates its visual with the new name of the component. An event NavigationControlChanged checks to see if the workflow needs to update its view of the navigation based on a control change. If, for example, a button has been added to a screen in the workflow, then the view is updated to show the availability of a new navigation node on that screen. An event ScreenParameterListChanged checks to see if a screen's parameter list has changed and that the screen is in the workflow. The view of any navigation involving that screen is updated. An event NavigationChanged checks to see if a possible navigation change has occurred. The change is parsed and any necessary updates are made to the view. An event ExitCodeChanged checks to see if an exit point has been added/removed. The editor view is updated to reflect this visually.

A sample interface of the screen editor 608 extends org.eclipse.ui.editors using the GEF GraphicalEditor.

### Message-Data Relationship Editor

The message editor 604 facilitates creating and modifying the structured definition language code in the inter-related message and data components of the application. The message/data relationship editor creates and edits relationships between message components and data components. These mappings effect how a data component is populated on message arrival at the device 102 when running the application. For example, data object definitions common between data and message components can exist such that the data object definitions are resident in the data component, while a data mapping definition links the message component to the data object definition in the data component is resident in the message component, or vice versa. A similar configuration can be employed for data object definitions common between screen and data components, whereby the data object definition is resident in one of the components and the data mapping definition is resident in the other associated component.

Sample commands that can be edited by the editor 604 include the following. AddComponent is sent when a new data or message is added to the relationship diagram with the effect of also adding that component to the application being developed. This command triggers ComponentAdded of the design time model 508 if successful. QueryMessages is sent when the developer needs a list of Messages to map. QueryData is sent when the developer needs a list of Data to map. ChangeMessageLevelMapping is sent when the developer changes a message level mapping. This command triggers FieldMappingChanged of the data model 508 if successful. ChangeFieldLevelMapping is sent when the developer changes a field level mapping. This command triggers FieldMappingChanged of the data model 508 if successful. ChangePrototype is sent when the developer changes a prototype relationship between Data objects. This command triggers FieldMappingChanged of the data model 508 if successful. ChangeContainment is sent when the developer changes a containment relationship between data objects. This command triggers MessageContainmentChanged of the data model 508 if successful.

Sample input events to the editor 604 include the following. An event ComponentRemoved checks to see if the object removed was message or data. The relationship mapper deletes any relationships involving the removed object. An event ComponentRenamed checks to see if the renamed object is involved in any mapping relationships. The visual representation of the mapped object is updated with the new name. An event MessageFieldChanged checks to see if the message involved is present in the relationship editor. The field change is then reflected in the visual representation of the message. If the field in question is involved in a mapping, then changes are reflected and the developer may need to be warned of broken mappings is applicable. An event DataFieldChanged is similar to MessageFieldChanged except using data instead of messages.

An sample interface of the editor 604 extends org.eclipse.ui.editors using the GEF GraphicalEditor. The design tool 500 coordinates the creation and/or modification of message/data definitions in the message/data components as well as the inter-relation of the created/modified message/data definitions affecting other associated components of the application.

### Localization Editor

The localization editor 614 allows the developer to collect all strings that will be visible to the application end-user (of the device 100) and edit them in one place. The editor 614 also allows the developer to create multiple resource mappings for each string into different languages. A sample command that can be edited by the editor 614 includes ChangeLocalizeString, which is sent when the developer adds, deletes or modifies a localized string. A sample input event to the editor 614 includes an event LocalizedStringChanged, which is used to determine when a string literal has been changed in the script editor or a label has changed in the screen editor 608. The localization editor 614 can extend the org.eclipse.ui.editors interface by extending an EditorPart.

### Backend Visualizer Editor

The backend visualizer editor 616 shows the developer the relationships between message components and the backend servers that drive the components. The editor 616 also allows the developer to add new backend servers to the list of those supported by the application in development. In addition to interaction with the design time data model 508, as is described for other modules 501 using commands and events received, the Backend Visualizer editor 616 collaborates with the backend connector. The backend connector 516 allows the visualizer to request a Serviceslnterface from a registry of known service types. A list of services of this type is returned that can queried by name or by iteration.

Sample commands that can be edited by the editor 616 include the following. AddComponent is sent when the developer adds a new message. This command triggers ComponentAdded of the data model 508 if successful. SpecifyMapping is sent when the developer connects a message to a selected backend server 108.

Sample input events to the editor 616 include the following. An event ComponentRemoved checks to see if the component is a message. The backend visualizer adjusts its mappings for that message. An event ComponentRenamed is similar to ComponentRemoved. An event MessageFieldChanged validates the message field against what exists on the backend server 108 and visually notifies of any broken mappings. Backend servers 108 are accessed through direct calls to the service layers. Optionally, background processing may be used to keep network processing from blocking UI threads. The Editor 616 can extend the org.eclipse.ui.editors using the GEF GraphicalEditor. Execution of the Messaging Protocol When Deployed

The operation of the reliable messaging protocol as implemented at the device and server is described as follows. When executing on the device, an application generates outgoing messages and receives incoming messages. When outgoing messages are delivered to a messaging layer on the device, the operations on the message will be determined according to its predefined reliability mode property as well as the state of the device and destination server. Each of the messages includes a reliability header field indicating the reliability level of the message.

Reliable and standard messages will be assigned a delivery sequence number. The delivery sequence number is stored in a sequence header field of the message. Delivery sequence number generation can be shared between applications for message ordering between all applications, or each application can have distinct sequence number generators, depending on the system requirements. Reliable messages are also placed in persistent storage. Messages are then sent to a messaging layer for delivery to the receiver in accordance with their delivery sequence number.

All messages are queued and transmitted in the order in which they are received by the messaging layer. When transmission for a best-effort or standard message succeeds, the message is removed from the queue in the device memory. When receipt of a reliable message is acknowledged, it is removed from the queue in memory as well as from the persistent storage.

The messaging layer also handles incoming messages dynamically based on the reliability mode property. Reliable messages are persisted and queued in memory before transmitting an acknowledgement to the server, and they remain in persistent storage until they are processed. Both standard and best-effort messages are queued only in memory. Further, standard and reliable messages include sequence numbers, which ensures that they are processed in the correct order.

The application server of the present embodiment has a pair of queues. One queue is a processing queue and the other queue is a delivery queue. The application server is responsible for asynchronously processing application messages via the processing queue and delivering a result to the device via the delivery queue.

The application server uses the processing queue for enforcing the reliability mode of the message for message processing and message processing order on a per message basis. Those of ordinary skill in the art will realize that the present embodiment differs from traditional message server models, where the server offers delivery mode guarantees on a per queue basis, with one application per queue.

For each incoming message, the server determines the message reliability mode and queues the message accordingly. The reliability mode is determined by checking the reliability header field. Accordingly, best-effort messages are simply placed into the processing queue in the order they arrive. Standard messages are placed into the queue in accordance with the order assigned by the device. Similarly, reliable messages are placed into the queue in accordance with the order assigned by the device. Further, reliable message are stored in a persistent storage at the server.

For an ordered message, which in the present embodiment are messages assigned a standard or reliable delivery mode, the processing sequence number is retrieved from the sequence header field. The server ensures message ordering via the processing queue, where the priority is given to messages with the oldest processing sequence numbers.

The application server uses the delivery queue for enforcing the reliability mode of the message for message delivery and message delivery order on a per message basis. The process for message delivery is similar to that described with reference to message delivery from the device.

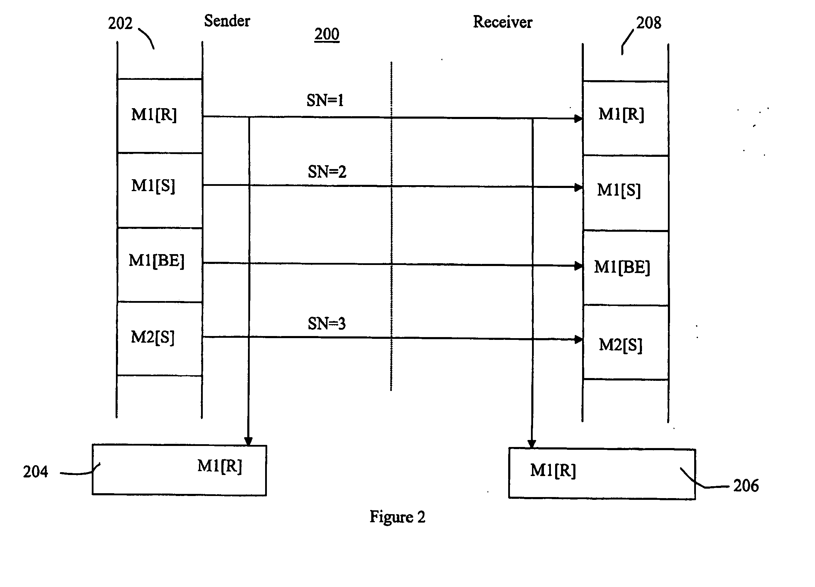

Referring to Figure 2, a block diagram illustrating the transmission of messages from a sender to a receiver is shown generally by numeral 200. In the present example, four messages *M1[R], M1[S], M1[BE],* and *M2[S]* are transmitted. Message *M1[R]* is a reliable message, messages *M1[S]* and *M2[S]* are standard messages, and message *M1[BE]* is a best effort message. The messages *M1[R], M1[S], M1[BE],* and *M2[S]* are queued in the sender's memory 202 in the order they are received. The reliable and standard messages *M1[R], M1[S],* and *M2[S]* are assigned delivery sequence numbers SN for assuring their delivery order. Also, the reliable message *M1[R]* is stored in a sender persistent storage 204.

At the receiver, the messages *M1[R], M1[S], M1[BE],* and *M2[S]* are queued in the receiver's memory 208. The processing sequence numbers for the reliable and standard messages *M1[R], M1[S],* and *M2[S]* are retrieved from the sequence header field and the reliable message *M1[R]* is stored in a receiver persistent storage 206.

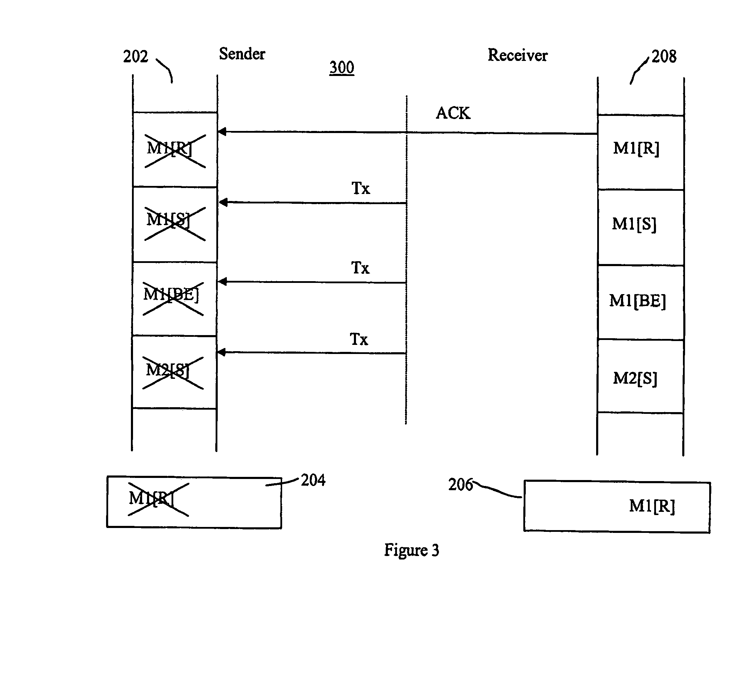

Referring to Figure 3, a block diagram illustrating the sequence of events for removing messages from the sender's message queue 202 is shown generally by numeral 300. Once the receiver receives the reliable message *M1[R],* the receiver stores it in both the receiver persistent storage 206 and the receiver's memory 208 before closing the connection with the sender. Once the connection is closed, the transport layer is responds with a message Tx comprising either an acknowledgment message ACK if the message was successfully transmitted or an error code otherwise. If the sender receives an error code, it retries to send the message a predefined number of times. If the sender does not receive an acknowledgment message ACK, an error message is returned to the application. If, however, the sender receives an acknowledgement message ACK, it deletes the reliable message *M1[R]* from both the sender's memory 202 and the sender's persistent storage 204.

For the standard messages *M1[S], M2[S],* and best-effort messages *M1[BE],* the receiver does not need to guarantee message processing. Accordingly, once the receiver receives the messages *M1[S], M2[S], M1[BE],* the receiver stores it in the receiver's memory 208 before closing the connection with the sender. Once the connection is closed, the transport layer is responds with either an acknowledgment message ACK if the message was successfully transmitted or an error code otherwise. If the sender receives an error code, it retries to send the message a predefined number of times. If the sender does not receive an acknowledgment message ACK, an error message is returned to the application. In response to the successful transmission message *ACK,* the messages *M1[S], M2[S],* and *M1[BE],* are deleted from the sender's memory 202.

In an alternate embodiment, messages are grouped in accordance with their ordering scope. Ordering scope defines the processing order and delivery order guarantees on a set of messages. Since the reliability mode is enforced on per message basis, for any given message its order of processing and delivery is relative to messages in the same order scope. Examples of ordering scope include operation, application, device and system. Thus, for example, if the ordering scope is set to application, then all sequence numbers are generated on a per application gateway.

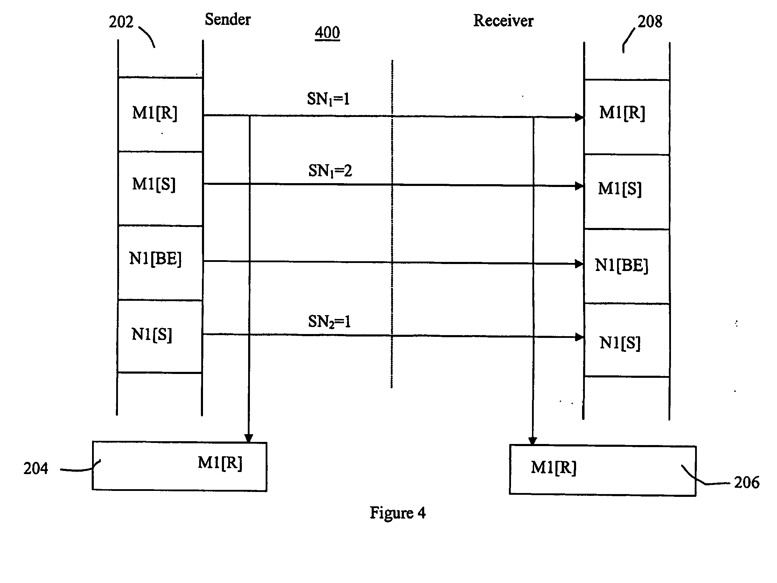

Referring to Figure 4, a block diagram illustrating the transmission of messages from a sender to a receiver is shown generally by numeral 400. In the present example, four messages *M1[R], M1[S], N1[BE],* and *N1[S]* are transmitted. Message *M1[R]* is a reliable message, messages *M1[S]* and *N1[S]* are standard messages, and message *N1[BE]* is a best effort message. The messages *M1[R]* and *M1[S]* are received from a first application and messages *N1[BE],* and *N1[S]* received from a second application. The reliable and standard message *M1[R]* and *M1[S]* and assigned delivery sequence numbers *SN₁* and the standard and best-effort message *N1[S]* and *N1[BE]* are assigned delivery sequence numbers *SN₂* for assuring their delivery order in accordance with their application. As in the previous embodiment, the reliable message *M1[R]* is stored in a sender persistent storage 204.

Partitioning messages by scope allows for quality of service (QoS) to be built in to the message delivery system. For example, a first application may be designated twice the bandwidth of a second application. Since the sequence numbers are assigned on a per application basis, it is possible to ensure that at least two messages from the first application are transmitted for every message from the second application, when both applications have messages in the queue to be transmitted.

Furthermore, although it is possible to achieve this using a single pair of queues as described in the previous embodiment, it may be more efficient to assign a pair of queues for each ordering scope. A person of ordinary skill in the art will appreciate that this may be done at either or both the device and the server depending on the device constraints and the implementation requirements.

In yet an alternate embodiment, the message reliability relates to messages communicated between the device 102 and an application gateway (not shown), rather than between the device and the sever 106. Accordingly, the application gateway can be viewed an intermediate server. For such an embodiment, the communication between the device 102 and the application gateway occurs in a similar fashion to that described in the previous embodiments. The application gateway then communicates with the server 106 in any known or proprietary manner that the implementation requires, including the methods described in the previous embodiments.

Although preferred embodiments of the invention have been described herein, it will be understood by those skilled in the art that variations may be made thereto within the scope of the appended claims.

## Claims

1. A method for transmitting application messages from a sender (102; 106) to a receiver (106; 102) via a communication network (104), the method being **characterized by** the steps of:
receiving application messages at the sender (102, 106) to transmit to the receiver (106, 102), each of the messages including a reliability mode reference indicating a message reliability level for the message, the message reliability level for each of the messages being assigned out of a plurality of predefined message reliability levels, each of the messages having a predefined reliability mode;
for each of the messages:
identifying the predefined reliability mode by checking the reliability mode reference of the message;
selecting messaging operations from a plurality of messaging operations depending on the identified predefined reliability mode, the messaging operations providing a different level of reliability for each pre-defined reliability mode;
processing the message at the sender using the selected messaging operations; and
using a predefined transport protocol for transmitting the message to the receiver (106, 102) for processing using messaging operations associated with the reliability mode reference to process the message.

2. The method of claim 1, further comprising the step of assigning a sequence number to each of said messages in accordance with the predefined reliability mode, the sequence number for facilitating ordered message delivery.

3. The method of claim 2, wherein the sequence number and reliability mode are transmitted in a message header or a digital signature along with the message.

4. The method of claim 2 or claim 3, wherein messages are grouped in accordance with their ordering scope.

5. The method of any one of claims 2 to 4, wherein a different series of sequence numbers are generated for each group of messages.

6. The method of any one of claims 1 to 5, wherein one of the sender (102; 106) and the receiver (106; 102) is a client (102) and the other of the sender and the receiver is a server (106).

7. A computer readable medium comprising instructions, which, when executed by a computing device, cause the computing device to execute the method of any one of claims 1 to 6.

8. A method for receiving messages from a sender (102; 106) at a receiver (106; 102) via a communication network (104), the method **characterized by** the steps of:
receiving application messages at the receiver, each of the messages including a reliability mode reference indicating a message reliability level for the message, the message reliability level of each of the messages being assigned out of a plurality of predefined message reliability levels, each of the messages having a predefined reliability mode;
for each of the messages:
identifying the predefined reliability mode by checking the reliability mode reference of the message;
selecting messaging operations from a plurality of messaging operations depending on the identified predefined reliability mode, the messaging operations providing a different level of reliability for each pre-defined reliability mode and defining how the messages are to be processed at the sender and the receiver; and
processing each of the messages at the receiver using the selected messaging operations associated with the reliability mode reference included in the message.

9. The method of claim 8, wherein the step of processing each of the messages comprises the step of retrieving an assigned sequence number for the messages in accordance with the predefined reliability mode, the sequence number for facilitating ordered message delivery.

10. The method of claim 9, wherein the sequence number and reliability mode are retrieved from a message header or a digital signature of the message.

11. The method of claim 9 or claim 10, wherein messages are grouped in accordance with their ordering scope.

12. The method of any one of claims 9 to 11, wherein a different pairs of queues are used for processing different messages groups.

13. The method of any one of claims 7 to 12, wherein one of the sender (102; 106) and the receiver (106; 102) is a client (102) and the other of the sender and receiver is a server (106).

14. A computer readable medium comprising instructions, which, when executed by a computing device, cause the computing device to execute the method of any one of claims 7 to 13.

15. A transmitter (102; 106) for transmitting messages to a receiver (106; 102) via a communication network (104), the transmitter **characterized by**:
memory for queuing messages received from an application, each of the messages including a reliability mode reference indicating a message reliability level, the message reliability level for each of the messages being assigned out of a plurality of predefined message reliability levels, each of the messages having a predefined reliability mode;
a processor configured to
identify the predefined reliability mode for each of the messages and select messaging operations from a plurality of messaging operations depending on the identified predefined reliability mode, and
process the message using the selected messaging operations;
a protocol layer for transmitting each of the messages to the receiver using a selected transport protocol.

16. The transmitter of claim 15, further comprising a sequence number generator for generating a sequence number in accordance with the predefined reliability mode and message order of the message.

17. The transmitter of claim 16, further comprising a header generator for generating a message header comprising fields for the sequence number and reliability mode for transmission with the message.

18. The transmitter of claim 16, further comprising a signature generator for generating a message signature comprising fields for the sequence number and reliability mode for transmission with the message.

19. The transmitter of any one of claims 16 to 18, wherein messages are grouped in accordance with their ordering scope.

20. The transmitter of any one of claims 16 to 19, wherein the sequence number generator generates a different series of sequence numbers for each group of messages.

21. The transmitter of any one of claims 15 to 20, wherein one of the transmitter (102; 106) and the receiver (106; 102) is a client (102) and the other of the transmitter and the receiver is a server (106).

22. A receiver (106; 102) for receiving application messages from a sender (102; 106) via a communication network (104), the receiver **characterized by**:
means for receiving application messages at the receiver, each of the messages including a reliability mode reference indicating a message reliability level for the message, the message reliability level of each of the messages being assigned out of a plurality of predefined message reliability levels, each of the messages having a predefined reliability mode;
means for identifying for each of the messages the predefined reliability mode out by checking the reliability mode reference of the message;
means for selecting messaging operations from a plurality of messaging operations depending on the identified predefined reliability mode, the messaging operations providing a different level of reliability for each pre-defined reliability mode and defining how the messages are to be processed at both the sender and the receiver; and
means for processing each of the messages at the receiver using the selected messaging operations.

23. A communications network (104) comprising at least one transmitter (102; 106) according to any one of claims 15 to 21 and at least one receiver (106; 102) according to claim 22.

24. An application development environment (500) for facilitating the development of an application for execution on a computing device (102; 106), the application development tool configured to provide a developer with an option to assign a predefined reliability mode reference for each message in the application, the reliability mode reference for indicating a message reliability level for the message, the message reliability level of each of the messages being assigned out of a plurality of predefined message reliability levels, the predefined reliability mode reference for indicating which of a plurality of messaging operations to use for communicating the message during execution of the application, the messaging operations defining how the messages are to be processed at both the sender and the receiver.

## Patentansprüche

1. Verfahren zur Übertragung von Anwendungsnachrichten von einem Sender (102; 106) an einen Empfänger (106; 102) über ein Kommunikationsnetzwerk (104), wobei das Verfahren durch die Schritte **gekennzeichnet** ist:
Empfangen von Anwendungsnachrichten an dem Sender (102, 106) zur Übertragung an den Empfänger (106, 102), wobei jede der Nachrichten eine Zuverlässigkeits-Modus-Referenz umfasst, die einen Nachrichten-Zuverlässigkeitsgrad für die Nachricht anzeigt, wobei der Nachrichten-Zuverlässigkeitsgrad für jede der Nachrichten aus einer Vielzahl von vordefinierten Nachrichten-Zuverlässigkeitsgraden zugewiesen ist, wobei jede der Nachrichten einen vordefinierten Zuverlässigkeits-Modus hat;
für jede der Nachrichten:
Identifizieren des vordefinierten Zuverlässigkeits-Modus durch Prüfen der Zuverlässigkeits-Modus-Referenz der Nachricht;
Auswählen von Messaging-Operationen aus einer Vielzahl von Messaging-Operationen abhängig von dem identifizierten vordefinierten Zuverlässigkeits-Modus, wobei die Messaging-Operationen einen unterschiedlichen Zuverlässigkeitsgrad für jeden vordefinierten Zuverlässigkeits-Modus vorsehen;
Verarbeiten der Nachricht an dem Sender unter Verwendung der ausgewählten Messaging-Operationen; und
Verwenden eines vordefinierten Transportprotokolls zum Übertragen der Nachricht an den Empfänger (106, 102) zur Verarbeitung unter Verwendung von Messaging-Operationen, die zu der Zuverlässigkeits-Modus-Referenz gehören, um die Nachricht zu verarbeiten.

2. Verfahren gemäß Anspruch 1, das weiter aufweist den Schritt eines Zuweisens einer Sequenznummer zu jeder der Nachrichten in Übereinstimmung mit dem vordefinierten Zuverlässigkeits-Modus, wobei die Sequenznummer vorgesehen ist zur Erleichterung einer Nachrichtenlieferung in Reihenfolge.

3. Verfahren gemäß Anspruch 2, wobei die Sequenznummer und der Zuverlässigkeits-Modus in einem Nachrichten-Header oder einer digitalen Signatur zusammen mit der Nachricht übertragen werden.

4. Verfahren gemäß Anspruch 2 oder Anspruch 3, wobei Nachrichten in Übereinstimmung mit ihrem Reihenfolgebereich gruppiert werden.

5. Verfahren gemäß einem der Ansprüche 2 bis 4, wobei eine andere Reihe von Sequenznummern für jede Gruppe von Nachrichten erzeugt wird.

6. Verfahren gemäß einem der Ansprüche 1 bis 5, wobei einer des Senders (102; 106) und des Empfängers (106; 102) ein Client (102) ist und der andere des Senders und des Empfängers ein Server (106) ist.

7. Computer-lesbares Medium, das Anweisungen aufweist, die bei Ausführung durch eine Computervorrichtung die Computervorrichtung veranlassen, das Verfahren gemäß einem der Ansprüche 1 bis 6 auszuführen.

8. Verfahren zum Empfangen von Nachrichten von einem Sender (102; 106) an einem Empfänger (106; 102) über ein Kommunikationsnetzwerk (104), wobei das Verfahren durch die Schritte **gekennzeichnet** ist:
Empfangen von Anwendungsnachrichten an dem Empfänger, wobei jede der Nachrichten eine Zuverlässigkeits-Modus-Referenz umfasst, die einen Nachrichten-Zuverlässigkeitsgrad für die Nachricht anzeigt, wobei der Nachrichten-Zuverlässigkeitsgrad für jede der Nachrichten aus einer Vielzahl von vordefinierten Nachrichten-Zuverlässigkeitsgraden zugewiesen ist, wobei jede der Nachrichten einen vordefinierten Zuverlässigkeits-Modus hat;
für jede der Nachrichten:
Identifizieren des vordefinierten Zuverlässigkeits-Modus durch Prüfen der Zuverlässigkeits-Modus-Referenz der Nachricht;
Auswählen von Messaging-Operationen aus einer Vielzahl von Messaging-Operationen abhängig von dem identifizierten vordefinierten Zuverlässigkeits-Modus, wobei die Messaging-Operationen einen unterschiedlichen Zuverlässigkeitsgrad für jeden vordefinierten Zuverlässigkeits-Modus vorsehen, und Definieren, wie die Nachrichten an dem Sender und dem Empfänger zu verarbeiten sind; und
Verarbeiten jeder der Nachrichten an dem Empfänger unter Verwendung der ausgewählten Messaging-Operationen, die zu der Zuverlässigkeits-Modus-Referenz gehören, die in der Nachricht enthalten ist.

9. Verfahren gemäß Anspruch 8, wobei der Schritt einer Verarbeitung jeder der Nachrichten aufweist den Schritt eines Erlangens einer zugewiesenen Sequenznummer für die Nachrichten in Übereinstimmung mit dem vordefinierten Zuverlässigkeits-Modus, wobei die Sequenznummer vorgesehen ist zur Erleichterung einer Nachrichtenlieferung in Reihenfolge.

10. Verfahren gemäß Anspruch 9, wobei die Sequenznummer und der Zuverlässigkeits-Modus aus einem Nachrichten-Header oder einer digitalen Signatur der Nachricht erlangt werden.

11. Verfahren gemäß Anspruch 9 oder Anspruch 10, wobei Nachrichten in Übereinstimmung mit ihrem Reihenfolgebereich gruppiert werden.

12. Verfahren gemäß einem der Ansprüche 9 bis 11, wobei ein anderes Paar von Warteschlangen zur Verarbeitung unterschiedlicher Nachrichtengruppen verwendet wird.

13. Verfahren gemäß einem der Ansprüche 7 bis 12, wobei einer des Senders (102; 106) und des Empfängers (106; 102) ein Client (102) ist und der andere des Senders und des Empfängers ein Server (106) ist.

14. Computer-lesbares Medium, das Anweisungen aufweist, die bei Ausführung durch eine Computervorrichtung die Computervorrichtung veranlassen, das Verfahren gemäß einem der Ansprüche 7 bis 13 auszuführen.

15. Sender (102; 106) zur Übertragung von Nachrichten an einen Empfänger (106; 102) über ein Kommunikationsnetzwerk (104), wobei der Sender **gekennzeichnet ist durch**:
Speicher zum Einreihen von Nachrichten, die von einer Anwendung empfangen werden, in eine Warteschlange, wobei jede der Nachrichten eine Zuverlässigkeits-Modus-Referenz umfasst, die einen Nachrichten-Zuverlässigkeitsgrad anzeigt, wobei der Nachrichten-Zuverlässigkeitsgrad für jede der Nachrichten aus einer Vielzahl von vordefinierten Nachrichten-Zuverlässigkeitsgraden zugewiesen ist, wobei jede der Nachrichten einen vordefinierten Zuverlässigkeits-Modus hat;
einen Prozessor, der konfiguriert ist
den vordefinierten Zuverlässigkeits-Modus für jede der Nachrichten zu identifizieren und Messaging-Operationen aus einer Vielzahl von Messaging-Operationen abhängig von dem identifizierten vordefinierten Zuverlässigkeits-Modus auszuwählen, und
die Nachricht zu verarbeiten unter Verwendung der ausgewählten Messaging-Operationen;
eine Protokollschicht zum Übertragen jeder der Nachrichten an den Empfänger unter Verwendung eines ausgewählten Transportprotokolls.

16. Sender gemäß Anspruch 15, der weiter aufweist einen Sequenznummern-Generator zum Erzeugen einer Sequenznummer in Übereinstimmung mit dem vordefinierten Zuverlässigkeits-Modus und der Nachrichtenreihenfolge der Nachricht.

17. Sender gemäß Anspruch 16, der weiter aufweist einen Header-Generator zum Erzeugen eines Nachrichten-Headers mit Feldern für die Sequenznummer und den Zuverlässigkeits-Modus zur Übertragung mit der Nachricht.

18. Sender gemäß Anspruch 16, der weiter aufweist einen Signatur-Generator zum Erzeugen einer Nachrichtensignatur mit Feldern für die Sequenznummer und den Zuverlässigkeits-Modus zur Übertragung mit der Nachricht.

19. Sender gemäß einem der Ansprüche 16 bis 18, wobei Nachrichten in Übereinstimmung mit ihrem Reihenfolgebereich gruppiert werden.

20. Sender gemäß einem der Ansprüche 16 bis 19, wobei der Sequenznummern-Generator eine andere Reihe von Sequenznummern für jede Gruppe von Nachrichten erzeugt.

21. Sender gemäß einem der Ansprüche 15 bis 20, wobei einer des Senders (102; 106) und des Empfängers (106; 102) ein Client (102) ist und der andere des Senders und des Empfängers ein Server (106) ist.

22. Empfänger (106; 102) zum Empfangen von Anwendungsnachrichten von einem Sender (102; 106) über ein Kommunikationsnetzwerk (104), wobei der Empfänger **gekennzeichnet ist durch**:
Mittel zum Empfangen von Anwendungsnachrichten an dem Empfänger,
wobei jede der Nachrichten eine Zuverlässigkeits-Modus-Referenz umfasst,
die einen Nachrichten-Zuverlässigkeitsgrad für die Nachricht anzeigt, wobei der Nachrichten-Zuverlässigkeitsgrad für jede der Nachrichten aus einer Vielzahl von vordefinierten Nachrichten-Zuverlässigkeitsgraden zugewiesen ist, wobei jede der Nachrichten einen vordefinierten Zuverlässigkeits-Modus hat;
Mittel zum Identifizieren, für jede der Nachrichten, des vordefinierten Zuverlässigkeits-Modus **durch** Prüfen der Zuverlässigkeits-Modus-Referenz der Nachricht;
Mittel zum Auswählen von Messaging-Operationen aus einer Vielzahl von Messaging-Operationen abhängig von dem identifizierten vordefinierten Zuverlässigkeits-Modus, wobei die Messaging-Operationen einen unterschiedlichen Zuverlässigkeitsgrad für jeden vordefinierten Zuverlässigkeits-Modus vorsehen, und Definieren, wie die Nachrichten an sowohl dem Sender als auch dem Empfänger zu verarbeiten sind; und
Mittel zum Verarbeiten jeder Nachrichten an dem Empfänger unter Verwendung der ausgewählten Messaging-Operationen.

23. Kommunikationsnetzwerk (104), das zumindest einen Sender (102; 106) gemäß einem der Ansprüche 15 bis 21 und zumindest einen Empfänger (106; 102) gemäß Anspruch 22 aufweist.

24. Anwendungsentwicklungsumgebung (500) zur Erleichterung der Entwicklung einer Anwendung zur Ausführung auf einer Computervorrichtung (102; 106), wobei das Anwendungsentwicklungstool konfiguriert ist, einem Entwickler eine Option zu geben, eine vordefinierte Zuverlässigkeits-Modus-Referenz für jede Nachricht in der Anwendung zuzuweisen, wobei die Zuverlässigkeits-Modus-Referenz vorgesehen ist zum Anzeigen eines Nachrichten-Zuverlässigkeitsgrads für die Nachricht, wobei der Nachrichten-Zuverlässigkeitsgrad für jede der Nachrichten aus einer Vielzahl von vordefinierten Nachrichten-Zuverlässigkeitsgraden zugewiesen ist, wobei die vordefinierte Zuverlässigkeits-Modus-Referenz vorgesehen ist zur Anzeige, welche einer Vielzahl von Messaging-Operationen zu verwenden ist zum Kommunizieren der Nachricht während einer Ausführung der Anwendung, wobei die Messaging-Operationen definieren, wie die Nachrichten an sowohl dem Sender als auch dem Empfänger zu verarbeiten sind.

## Revendications

1. Procédé d'émission de messages applicatifs entre un émetteur (102 ; 106) et un récepteur (106 ; 102), via un réseau de communication (104), le procédé étant **caractérisé par** les étapes consistant à :
recevoir sur l'émetteur (102, 106) des messages applicatifs à émettre vers le récepteur (106, 102), chacun des messages comprenant une référence de mode de fiabilité qui indique un niveau de fiabilité pour le message, le niveau de fiabilité de chacun des messages étant attribué à partir d'une pluralité de niveaux de fiabilité de messages prédéfinis et chacun des messages possédant un mode de fiabilité prédéfini ;
pour chacun des messages :
identifier le mode de fiabilité prédéfini en examinant la référence de mode de fiabilité du message ;
sélectionner des opérations de messagerie, parmi une pluralité d'opérations de messagerie, en fonction du mode de fiabilité prédéfini identifié, les opérations de messagerie offrant un niveau de fiabilité différent pour chaque mode de fiabilité prédéfini ;
traiter le message sur l'émetteur en utilisant les opérations de messagerie sélectionnées ; et
utiliser un protocole de transport prédéfini pour émettre le message vers le récepteur (106, 102) en vue de son traitement, à l'aide d'opérations de messagerie associées à la référence de mode de fiabilité pour le traitement du message.

2. Procédé selon la revendication 1, comprenant en outre l'étape consistant à assigner un numéro d'ordre à chacun des messages, en fonction du mode de fiabilité prédéfini, le numéro d'ordre étant destiné à faciliter une remise ordonnée des messages.

3. Procédé selon la revendication 2, dans lequel le numéro d'ordre et le mode de fiabilité sont émis dans un en-tête du message ou dans une signature numérique avec le message.

4. Procédé selon la revendication 2 ou la revendication 3, dans lequel les messages sont groupés en fonction de leur plage de classement.

5. Procédé selon l'une quelconque des revendications 2 à 4, dans lequel une série différente de numéros d'ordre est produite pour chaque groupe de messages.

6. Procédé selon l'une quelconque des revendications 1 à 5, dans lequel, sur l'émetteur (102, 106) et le récepteur (106, 102), l'un est un client (102) et l'autre est un serveur (106).

7. Support lisible par ordinateur, comprenant des instructions qui, lorsqu'elles sont exécutées par un dispositif informatique, commandent au dispositif informatique d'exécuter le procédé selon l'une quelconque des revendications 1 à 6.

8. Procédé de réception par un récepteur (106 ; 102) de messages provenant d'un émetteur (102 ; 106), via un réseau de communication (104), le procédé étant **caractérisé par** les étapes consistant à :
recevoir des messages applicatifs sur le récepteur, chacun des messages comprenant une référence de mode de fiabilité indiquant un niveau de fiabilité du message, le niveau de fiabilité de chacun des messages étant attribué à partir d'une pluralité de niveaux de fiabilité de messages prédéfinis et chacun des messages possédant un mode de fiabilité prédéfini ;
pour chacun des messages :
identifier le mode de fiabilité prédéfini en examinant la référence de mode de fiabilité du message ;
sélectionner des opérations de messagerie, parmi une pluralité d'opérations de messagerie, en fonction du mode de fiabilité prédéfini identifié, les opérations de messagerie offrant un niveau de fiabilité différent pour chaque mode de fiabilité prédéfini et définissant comment les messages doivent être traités sur l'émetteur et sur le récepteur ; et
traiter chacun des messages sur l'émetteur en utilisant les opérations de messagerie sélectionnées qui sont associées à la référence de mode de fiabilité incluse dans le message.

9. Procédé selon la revendication 8, dans lequel l'étape de traitement de chacun des messages comprend l'étape consistant à obtenir un numéro d'ordre attribué aux messages en fonction du mode de fiabilité prédéfini, le numéro d'ordre étant destiné à faciliter une remise ordonnée des messages.

10. Procédé selon la revendication 9, dans lequel le numéro d'ordre et le mode de fiabilité sont extraits d'un en-tête du message ou d'une signature numérique du message.

11. Procédé selon la revendication 9 ou la revendication 10, dans lequel les messages sont groupés en fonction de leur plage de classement.

12. Procédé selon l'une quelconque des revendications 9 à 11, dans lequel des paires de files d'attente différentes sont utilisées pour le traitement de différents groupes de messages.

13. Procédé selon l'une quelconque des revendications 7 à 12, dans lequel, sur l'émetteur (102, 106) et le récepteur (106, 102), l'un est un client (102) et l'autre est un serveur (106).

14. Support lisible par ordinateur, comprenant des instructions qui, lorsqu'elles sont exécutées par un dispositif informatique, commandent au dispositif informatique d'exécuter le procédé selon l'une quelconque des revendications 7 à 13.

15. Émetteur (102 ; 106) destiné à émettre des messages vers un récepteur (106 ; 102) via un réseau de communication (104), l'émetteur étant **caractérisé par** :
une mémoire destinée à mettre en file d'attente des messages reçus d'une application, chacun des messages comprenant une référence de mode de fiabilité qui indique un niveau de fiabilité pour le message, le niveau de fiabilité de chacun des messages étant attribué à partir d'une pluralité de niveaux de fiabilité de messages prédéfinis et chacun des messages possédant un mode de fiabilité prédéfini ;
un processeur configuré afin :
d'identifier le mode de fiabilité prédéfini pour chacun des messages et sélectionner des opérations de messagerie, parmi une pluralité d'opérations de messagerie, en fonction du mode de fiabilité prédéfini identifié; et
de traiter le message en utilisant le mode de fiabilité prédéfini ;
une couche de protocole pour émettre chacun des messages vers le récepteur en utilisant un protocole de transport sélectionné.

16. Émetteur selon la revendication 15, comprenant en outre un générateur de numéro d'ordre destiné à produire un numéro d'ordre en fonction du mode de fiabilité prédéfini et de l'ordre du message.

17. Émetteur selon la revendication 16, comprenant en outre un générateur d'en-tête destiné à produire un en-tête de message comprenant des champs pour le numéro d'ordre et le mode de fiabilité, afin de l'émettre avec le message.

18. Émetteur selon la revendication 16, comprenant en outre un générateur de signature, destiné à produire une signature de message comprenant des champs pour le numéro d'ordre et le mode de fiabilité, afin de l'émettre avec le message.

19. Émetteur selon l'une quelconque des revendications 16 à 18, dans lequel les messages sont groupés en fonction de leur plage de classement.

20. Émetteur selon l'une quelconque des revendications 16 à 19, dans lequel le générateur de numéro d'ordre produit une série différente de numéros d'ordre pour chaque groupe de messages.

21. Émetteur selon l'une quelconque des revendications 15 à 20, dans lequel, sur l'émetteur (102, 106) et le récepteur (106, 102), l'un est un client (102) et l'autre est un serveur (106).

22. Récepteur (106 ; 102) destiné à recevoir des messages applicatifs en provenance d'un émetteur (102 ; 106), via un réseau de communication (104), le récepteur étant **caractérisé par** :
un moyen destiné à recevoir des messages applicatifs sur le récepteur, chacun des messages comprenant une référence de mode de fiabilité qui indique un niveau de fiabilité pour le message, le niveau de fiabilité de chacun des messages étant attribué à partir d'une pluralité de niveaux de fiabilité de messages prédéfinis et chacun des messages possédant un mode de fiabilité prédéfini ;
un moyen destiné à identifier le mode de fiabilité prédéfini pour chacun de messages en examinant la référence de mode de fiabilité du message ;
un moyen destiné à sélectionner des opérations de messagerie parmi une pluralité d'opérations de messagerie, en fonction du mode de fiabilité prédéfini identifié, les opérations de messagerie offrant un niveau de fiabilité différent pour chaque mode de fiabilité prédéfini et définissant comment les messages doivent être traités à la fois sur l'émetteur et sur le récepteur ; et
un moyen destiné à traiter chacun des messages sur le récepteur en utilisant les opérations de messagerie sélectionnées.

23. Réseau de communication (104) comprenant au moins un émetteur (102 ; 106) selon l'une quelconque des revendications 15 à 21 et au moins un récepteur (106 ; 102) selon la revendication 22.

24. Environnement de développement d'applications (500), destiné à faciliter le développement d'une application devant s'exécuter sur un dispositif informatique (102 ; 106), l'outil de développement d'applications étant configuré pour fournir à un développeur une option d'attribution d'une référence de mode de fiabilité prédéfinie à chaque message dans l'application, la référence de mode de fiabilité indiquant un niveau de fiabilité pour le message, le niveau de fiabilité de chacun des messages étant attribué à partir d'une pluralité de niveaux de fiabilité de message prédéfinis, la référence de mode de fiabilité prédéfinie indiquant quelle opération utiliser, parmi une pluralité d'opérations de messagerie, pour communiquer le message pendant l'exécution de l'application, les opérations de messagerie définissant comment les messages doivent être traités à la fois sur l'émetteur et sur le récepteur.
